# NEUE EUROPÄISCHE PATENTSCHRIFT

(11) **EP 3 245 118 B2**
(45) Veröffentlichungstag und Bekanntmachung des Hinweises auf die Entscheidung über den Einspruch: **22.06.2022**
(45) Hinweis auf die Patenterteilung: 19.09.2018
(21) Anmeldenummer: 16700859.8
(22) Anmeldetag: 14.01.2016
(51) Int. Cl.: B62D 21/15, B60R 19/34

(54) **HOHLPROFIL MIT SICKEN**
HOLLOW PROFILED ELEMENT HAVING DEPRESSIONS
PROFILÉ CREUX POURVU DE MOULURES

(30) Priorität: 17.01.2015 DE 102015000548
(43) Veröffentlichungstag der Anmeldung: 22.11.2017
(73) Patentinhaber: Audi AG, 85045 Ingolstadt (DE)
(72) Erfinder: CIKLAKARSLI, Esref, 74177 Bad Friedrichshall (DE); GOTTHELF, Matthias, 74861 Neudenau (DE)
(86) Internationale Anmeldenummer: PCT/EP2016/000065
(87) Internationale Veröffentlichungsnummer: WO 2016/113136

(56) Entgegenhaltungen:
- WO-A2-2006/042032
- DE-A1- 19 959 701
- US-A- 5 431 445
- US-A1- 2010 019 518

## Beschreibung

Die Erfindung betrifft ein Hohlprofil mit mehreren in einer Längsrichtung verlaufende und durch Seitenwände verbundene Längskanten gemäß dem Oberbegriff des Patentanspruchs 1. Ferner betrifft die Erfindung eine Fahrzeugkarosserie mit einem erfindungsgemäßen Hohlprofil zur Verwendung als Längsträger oder Querträger.

Ein gattungsbildendes Hohlprofil ist aus der DE 10 2011 119 092 A1 bekannt. Dieses Hohlprofil ist als Längsträger mit mehreren Innenstegen zur Realisierung einer Mehrkammerstruktur ausgebildet und für eine Tragstruktur eines Fahrzeugs vorgesehen. Um eine Verbesserung der Einstellung des Anfangskraftniveaus sowie des Kraft-Weg-Verlaufs im Fall eines Fahrzeugaufpralls zu ermöglichen, werden mehrere Materialschwächungen an dem Hohlprofil vorgeschlagen. So sind als Materialschwächung zum einen Aussparungen an den Innenstegen und zum anderen Sicken an den Kanten des Hohlprofils vorgesehen. Mit einem solchen Hohlprofil, welches Aussparungen an den Innenwänden und Sicken an den Kanten aufweist, kann ein vorbestimmter Deformationsverlauf bzw. Faltungsverlauf des Längsträgers erreicht werden. Außerdem soll auch ein unkontrolliertes Wegknicken des Längsträgers verhindert werden.

Aufgabe der Erfindung ist es das eingangs genannte Hohlprofil in vorteilhafter Weise weiterzuentwickeln, so dass eine verbesserte Beeinflussung des Ansprechverhaltens des Hohlprofils hinsichtlich des Verformungsverlaufs bei Einwirken von Crashkräften erzielt wird.

Diese Aufgabe wird gelöst durch ein Hohlprofil mit den Merkmalen des Patentanspruchs 1.

Eine solches Hohlprofil mit einem eine Mehrkammerstruktur bildender und in einer Längsrichtung verlaufender Innensteg und mit mehreren in Längsrichtung verlaufende und durch Seitenwände verbundene Längskanten, bei welchem eine Längskante wenigstens eine Sicke aufweist, deren Sickengrund quer zur Längsrichtung und gegenüber den die Längskante bildende Seitenwänden schräg verläuft, zeichnet sich erfindungsgemäß dadurch aus, dass
- eine die Längskante bildende Seitenwand im Bereich der Sicke eine querverlaufende Aufwölbung aufweist, wobei der Sickengrund endseitig im Bereich dieser Seitenwand in die Aufwölbung übergeht,
- die Aufwölbung mit einer Form ausgebildet ist, welche im Übergang zur Sicke eine konvexe Form aufweist und vor Erreichen einer gegenüberliegenden Längskante auf die Ebene der Seitenwand abfällt,
- der Innensteg die die Aufwölbung aufweisende Seitenwand mit einer gegenüberliegenden Seitenwand verbindet, und
- die Aufwölbung mit einem Ende im Verbindungsbereich des Innensteges mit dieser Seitenwand ausgebildet ist.

Mit diesem erfindungsgemäßen Hohlprofil werden die das Verformungsverhalten eines Hohlprofils beeinflussenden Größen einer Sicke, die durch Sickentiefe, Sickenwinkel und Sickenradius gegeben sind, durch die die Sicke weiterführende Aufwölbung wesentlich erweitert. Mit der geometrischen Gestaltung dieser Aufwölbung hinsichtlich der Höhe, Breite und Länge sowie der Form ergeben sich erweiterte Einstellmöglichkeiten hinsichtlich eines gewünschten Verformungs- und Ansprechverhaltens, insbesondere kann der Kraft-Wegverlauf und der Ort der Verformung gezielt gesteuert werden.

Vorteilhafterweise ist es bei diesem erfindungsgemäßen Hohlprofil nicht erforderlich, dass die Sickentiefe der Sicke vergrößert wird, so dass auch hochfeste Aluminiumlegierungen, mit denen dies nur begrenzt möglich wäre, für das erfindungsgemäße Hohlprofil verwendet werden können.

Das erfindungsgemäße Hohlprofil kann natürlich mit mehreren Innenstegen bzw. Innenwänden ausgebildet werden.

Nach einer vorteilhaften Weiterbildung der Erfindung weist die weitere die Längskante bildende Seitenwand im Bereich der Sicke eine querverlaufende weitere Aufwölbung auf, wobei der Sickengrund endseitig im Bereich dieser weiteren Seitenwand in die Aufwölbung übergeht. Mit dieser Ausgestaltung der Erfindung geht der Sickengrund der Sicke jeweils endseitig an den angrenzenden Seitenwänden in eine Aufwölbung über. Damit werden die Einstellmöglichkeiten hinsichtlich eines gewünschten Verformungs- und Ansprechverhaltens weiter vergrößert.

Vorzugsweise ist es vorgesehen, dass an der gegenüberliegenden Längskante, die von der Seitenwand mit Aufwölbung gebildet wird, eine weitere Sicke mit einer weiteren Aufwölbung ausgebildet ist und die weitere Aufwölbung mit einem Ende ebenso im Verbindungsbereich des Innensteges mit der Seitenwand ausgebildet ist. Dabei ist es vorteilhaft, dass die beiden Aufwölbungen mit einem quer zur Längsrichtung miteinander fluchtenden Verlauf ausgebildet sind.

Vorteilhafter Weise ist das Hohlprofil als Längsträger oder als Querträger für eine Fahrzeugkarosserie ausgebildet.

Die Erfindung wird nachfolgend anhand von Ausführungsbeispielen unter Bezugnahme auf die beigefügten Figuren ausführlich beschrieben. Es zeigen:
- Figur 1: eine perspektivische und schematische Teilansicht eines Hohlprofils als Ausführungsbeispiel der Erfindung,
- Figur 2: eine Schnittdarstellung des Schnittes A-A nach Figur 1, und
- Figur 3: eine Schnittdarstellung eines Hohlprofils als weiteres Ausführungsbeispiel der Erfindung.

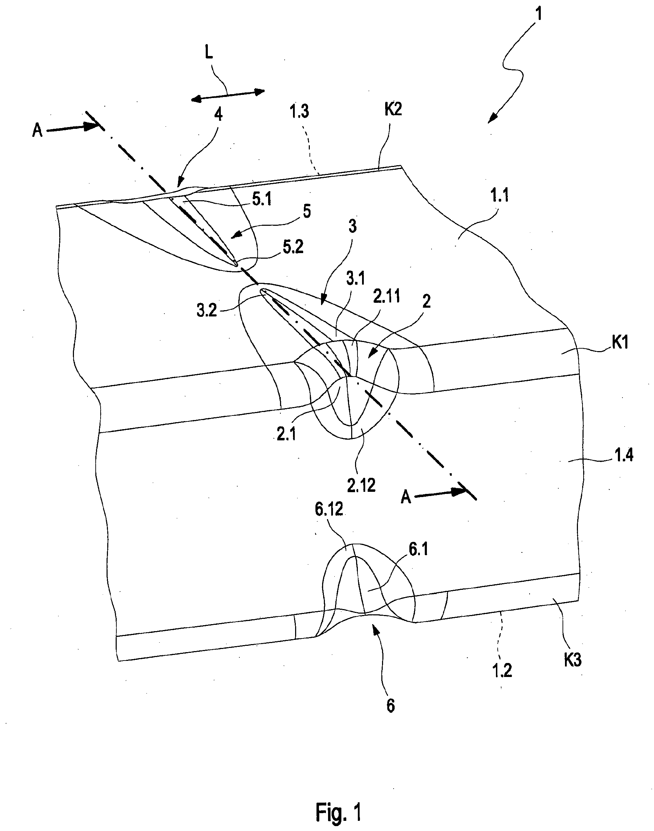

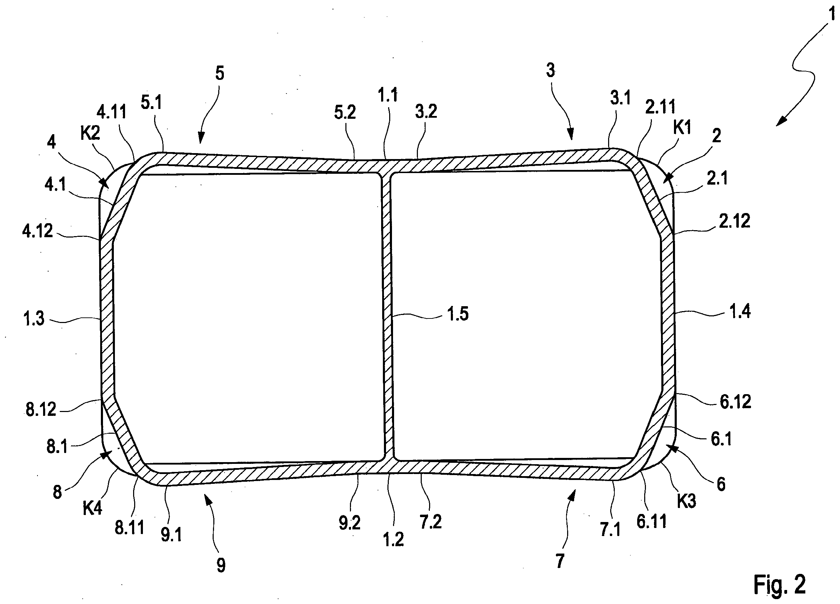

Das für einen Längsträger einer Fahrzeugkarosserie verwendete Hohlprofil 1 gemäß den Figuren 1 und 2 weist einen rechteckförmigen Querschnitt mit vier in Längsrichtung L verlaufenden Seitenwänden 1.1, 1.2, 1.3 und 1.4 auf. Jeweils zwei dieser Seitenwände 1.1 bis 1.4 bilden zusammen eine Längskante des Hohlprofils 1. Eine erste Längskante K1 wird von den Seitenwänden 1.1 und 1.4, eine zweite Längskante K2 wird von den Seitenwänden 1.1 und 1.3, eine dritte Längskante K3 wird von den Seitenwänden 1.2 und 1.4 und eine vierte Längskante K4 wird von den Seitenwänden 1.2 und 1.3 gebildet. Ferner ist dieses Hohlprofil 1 als Mehrkammerstruktur ausgebildet, indem die beiden gegenüberliegenden Seitenwände 1.1 und 1.2 durch einen Innensteg 1.5 mittig verbunden werden.

Ferner ist aus diesen Figuren 1 und 2 zu erkennen, dass in der von dem Schnitt A-A nach Figur 1 gebildeten Schnittebene umlaufend vier Sicken in den Längskanten eingeprägt sind. So weist die Längskante K1 eine Sicke 2, die Längskante K2 eine Sicke 4, die Längskante K3 eine Sicke 6 und die Längskante K4 eine Sicke 8 auf. Der Sickengrund 2.1, 4.1, 6.1 und 8.1 jeder dieser Sicken 2, 4, 6 und 8 verlaufen quer zur Längsrichtung L und schräg gegenüber den angrenzenden Seitenflächen 1.1 und 1.4, 1.1 und 1.3, 1.2 und 1.4 bzw. 1.2 und 1.3. Im Idealfall bildet ein Sickengrund mit der jeweils zugehörigen Seitenwand einen Winkel von ca. 45°.

Jeder der Sicken 2, 4, 6 und 8 geht an einer angrenzenden Seitenwand 1.1, und 1.2 in eine Aufwölbung 3, 5, 7 und 9 über. Diese Sickengeometrie wird im Folgenden näher erläutert.

Die Sicke 2 der Längskante K1 weist einen Sickengrund 2.1 auf, der mit einem Ende 2.12 in die Ebene der Seitenwand 1.4 übergeht. Das andere Ende 2.11 des Sickengrundes 2.1 geht jedoch in die Aufwölbung 3 der Seitenwand 1.1 über. Diese Aufwölbung 3 der Seitenwand 1.1 erstreckt sich quer zur Längsrichtung L und weist im Bereich des Überganges 3.1 der Aufwölbung 3 zur Sicke 2 einen erhabenen und konvexen Verlauf in Längsrichtung L auf, wobei sich dieser konvexe Verlauf in Richtung der gegenüberliegenden Längskante K2 verflacht und in einem Ende 3.2 endet, welches sich im Verbindungsbereich des Innensteges 1.5 mit dieser Seitenwand 1.1 befindet. An diesem Ende 3.2 geht die Aufwölbung 3 in die Ebene der Seitenwand 1.1 über.

An der zur Längskante K1 gegenüberliegenden Längskante K2 befindet sich die Sicke 4 mit einem Sickengrund 4.1, der an einem Ende 4.12 in die Ebene der Seitenwand 1.3 übergeht und an seinem gegenüberliegenden Ende 4.11 in eine weitere Aufwölbung 5 übergeht, die sich ebenso quer zur Längsrichtung L erstreckt und mit der Aufwölbung 3 fluchtet. In gleicher Weise ist diese Aufwölbung 5 im Übergangsbereich 5.1 zur Sicke 4 in Längsrichtung L erhaben und konvex ausgeformt und verflacht sich in Richtung der gegenüberliegenden Längskante K1 bis zum Ende 5.2, wo die Aufwölbung 5 in die Ebene der Seitenwand 1.1 übergeht.

In entsprechender Weise sind auch die Sicken 6 und 8 an den Längskanten K3 und K4 jeweils mit einer Aufwölbung 7 bzw. 9 ausgebildet. So geht der Sickengrund 6.1 der Sicke 6 mit einem Ende 6.12 in die Ebene der Seitenwand 1.4 über, während das andere Ende 6.11 den Übergangsbereich 7.1 zur Aufwölbung 7 der Seitenwand 1.2 bildet. Die Aufwölbung 7 endet mit ihrem Ende 7.2 im Verbindungsbereich des Innensteges 1.5 mit der Seitenwand 1.2. Die Sicke 8 der Kante K4 geht mit einem Ende 8.12 ihres Sickengrundes 8.1 in die Seitenwand 1.3 über und bildet mit dem anderen Ende 8.11 des Sickengrundes 8.1 den Übergangsbereich 9.1 der Aufwölbung 9 der Seitenwand 1.2, die ein Ende 9.2 im Verbindungsbereich des Innensteges 1.5 mit der Seitenwand 1.2 aufweist.

Mit einer solchen Geometrie, bestehend aus einer Sicke und einer Aufwölbung an der angrenzenden Seitenwand, kann das Verformungs- und Ansprechverhalten, der Kraft-Wegverlauf und der Ort der Verformung des Hohlprofils 1 als Längsträger in einer Fahrzeugkarosserie im Falle des Eintrages einer Crashkraft aufgrund eines Fahrzeugaufpralls gezielt gesteuert werden. In Abhängigkeit der geforderten Absorption von Crashenergie kann dies über die Geometrie, bspw. über die Breite, Länge, Höhe und/oder die Form der Aufwölbung eingestellt werden.

Insbesondere kann mit einer solchen aus einer Sicke und einer Aufwölbung bestehenden Geometrie sichergestellt werden, dass das Faltenbeulen an der gewünschten Stelle beginnt. Außerdem wird verhindert, dass ein solches Hohlprofil als Längsträger in Bereichen, die bedingt durch das Package einen geringeren Querschnitt aufweist, sich unkontrolliert verformt.

Ein solches Hohlprofil kann als Längsträger für Fahrzeugkarosserie eingesetzt und als Strangpreßprofil hergestellt werden, bspw. aus einer hochfesten Aluminiumlegierung. Natürlich sind auch andere Werkstoffe, wie bspw. Stahl oder faserverstärkte Verbundwerkstoffe einsetzbar.

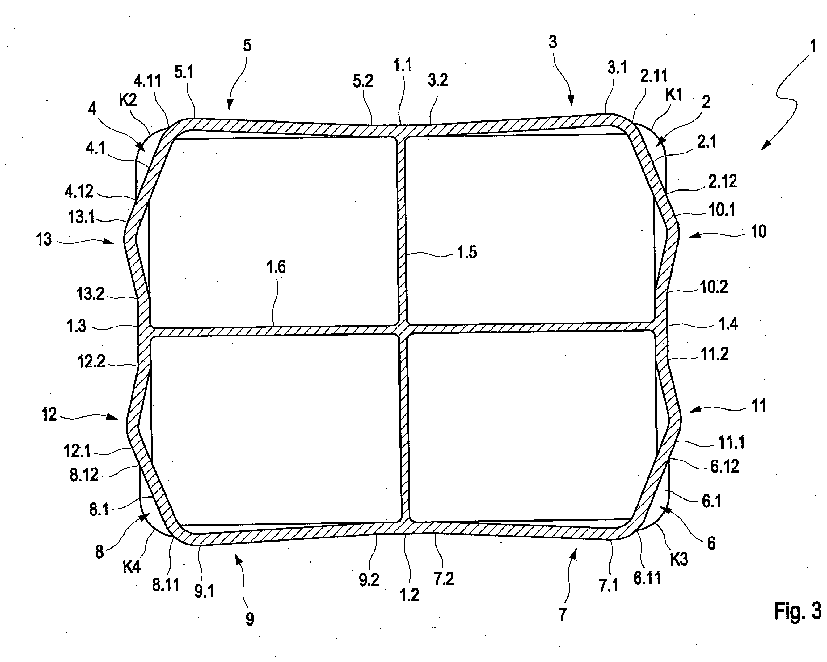

Ein weiteres Ausführungsbeispiel eines Hohlprofils 1 in einer Mehrkammerstruktur zeigt Figur 3. Dieses Hohlprofil 1 weist gegenüber demjenigen nach Figur 2 einen weiteren, quer zu dem ersten Innensteg 1.5 verlaufenden weiteren Innensteg 1.6 auf. Die Sicken 2, 4, 6 und 8 des Hohlprofils 1 nach Figur 2 gehen nur an einer benachbarten Seitenwand 1.1 und 1.2 in eine Aufwölbung 3, 5, 7 bzw. 9 über. An den anderen benachbarten Seitenwände 1.3 und 1.4 sind keine Aufwölbungen vorgesehen. Bei diesem Hohlprofil 1 gemäß Figur 3 weisen auch diese Seitenwände 1.3 und 1.4 Aufwölbungen 10 und 11 bzw. 12 und 13 auf.

So geht die Sicke 2 an der Längskante K1 mit ihrem Ende 2.12 des Sickengrundes 2.1 in den Übergangsbereich 10.1 der Aufwölbung 10 über, die in diesem Übergangsbereich 10.1 quer zur Längsrichtung L eine erhabene und konvexe Kontur aufweist, die in Richtung der gegenüberliegenden Längskante K3 flach in einem Ende 10.2 in der Ebene der Seitenwand 1.4 im Verbindungsbereich des zweiten Innensteges 1.6 mit der Seitenwand 1.4 ausläuft. Die der Sicke 2 gegenüberliegende Sicke 6 an der Längskante K3 weist in gleicher Weise eine in der Seitenwand 1.4 eingebrachte Aufwölbung 11 auf, die im Übergangsbereich 11.1 zur Sicke 6 in Längsrichtung L ebenso eine erhabene und konvexe Form aufweist und in Richtung des Verbindungsbereiches des zweiten Innensteges 1.6 mit der Seitenwand 1.4 abfällt und an ihrem Ende 11.2 flach in die Ebene der Seitenwand 1.4 übergeht.

Entsprechender Weise sind auch auf der gegenüberliegenden Seitenwand 1.3 entsprechende Aufwölbungen 12 und 13 vorgesehen, in die die Sicken 8 und 4 in der oben beschriebenen Weise übergehen.

Ein erfindungsgemäßes Hohlprofil kann mittels IHU-Umformung hergestellt werden.

### Bezugszeichen

- 1: Hohlprofil, Längsträger
- 1.1: Seitenwand des Hohlprofils 1
- 1.2: Seitenwand des Hohlprofils 1
- 1.3: Seitenwand des Hohlprofils 1
- 1.4: Seitenwand des Hohlprofils 1
- 1.5: Innensteg des Hohlprofils 1
- 1.6: Innensteg des Hohlprofils 1
- 2: Sicke an der Längskante K1 des Hohlprofils 1
- 2.1: Sickengrund der Sicke 2
- 2.11: Ende des Sickengrundes 2.1
- 2.12: Ende des Sickengrundes 2.1
- 3: Aufwölbung der Seitenwand 1.1 des Hohlprofils 1
- 3.1: Übergang der Aufwölbung 3 zur Sicke 2
- 3.2: Ende der Aufwölbung 3
- 4: Sicke an der Längskante K2 des Hohlprofils 1
- 4.1: Sickengrund der Sicke 4
- 4.11: Ende des Sickengrundes 4.1
- 4.12: Ende des Sickengrundes 4.1
- 5: Aufwölbung der Seitenwand 1.1 des Hohlprofils 1
- 5.1: Übergang der Aufwölbung 5 zur Sicke 4
- 5.2: Ende der Aufwölbung 3
- 6: Sicke an der Längskante K3 des Hohlprofils 1
- 6.1: Sickengrund der Sicke 6
- 6.11: Ende des Sickengrundes 6.1
- 6.12: Ende des Sickengrundes 6.1
- 7: Aufwölbung der Seitenwand 1.2 des Hohlprofils 1
- 7.1: Übergang der Aufwölbung 7 zur Sicke 6
- 7.2: Ende der Aufwölbung 7
- 8: Sicke an der Längskante K4 des Hohlprofils 1
- 8.1: Sickengrund der Sicke 8
- 8.11: Ende des Sickengrundes 8.1
- 8.12: Ende des Sickengrundes 8.1
- 9: Aufwölbung der Seitenwand 1.2 des Hohlprofils 1
- 9.1: Übergang der Aufwölbung 9 zur Sicke 8
- 9.2: Ende der Aufwölbung 9

- 10: Aufwölbung der Seitenwand 1.4 des Hohlprofils 1
- 10.1: Übergang der Aufwölbung 10 zur Sicke 2
- 10.2: Ende der Aufwölbung 10
- 11: Aufwölbung der Seitenwand 1.4 des Hohlprofils 1
- 11.1: Übergang der Aufwölbung 11 zur Sicke 6
- 11.2: Ende der Aufwölbung 11
- 12: Aufwölbung der Seitenwand 1.3 des Hohlprofils 1
- 12.1: Übergang der Aufwölbung 12 zur Sicke 8
- 12.2: Ende der Aufwölbung 12
- 13: Aufwölbung der Seitenwand 1.3 des Hohlprofils 1
- 13.1: Übergang der Aufwölbung 13 zur Sicke 4
- 13.2: Ende der Aufwölbung 13

- K1: Längskante des Hohlprofils 1
- K2: Längskante des Hohlprofils 1
- K3: Längskante des Hohlprofils 1
- K4: Längskante des Hohlprofils 1

## Patentansprüche

1. Hohlprofil (1) mit einem eine Mehrkammerstruktur bildender und in einer Längsrichtung (L) verlaufender Innensteg (1.5) und mit mehreren in Längsrichtung (L) verlaufende und durch Seitenwände (1.1, 1.2, 1.3, 1.4) verbundene Längskanten (K1, K2, K3, K4), bei welchem eine Längskante (K1) wenigstens eine Sicke (2) aufweist, deren Sickengrund (2.1) quer zur Längsrichtung (L) und gegenüber den die Längskante (K1) bildende Seitenwänden (1.1, 1.4) schräg verläuft,
**dadurch gekennzeichnet, dass**
- eine die Längskante (K1) bildende Seitenwand (1.1) im Bereich der Sicke (2) eine querverlaufende Aufwölbung (3) aufweist, wobei der Sickengrund (2.1) endseitig im Bereich dieser Seitenwand (1.1) in die Aufwölbung (3) übergeht,
- die Aufwölbung (3) mit einer Form ausgebildet ist, welche im Übergang zur Sicke (2) eine konvexe Form aufweist und vor Erreichen einer gegenüberliegenden Längskante (K2) auf die Ebene der Seitenwand (1.1) abfällt,
- der Innensteg (1.5) die die Aufwölbung (3) aufweisende Seitenwand (1.1) mit einer gegenüberliegenden Seitenwand (1.2) verbindet, und
- die Aufwölbung (3) mit einem Ende (3.2) im Verbindungsbereich des Innensteges (1.5) mit dieser Seitenwand (1.1) ausgebildet ist.

2. Hohlprofil (1) nach Anspruch 1,
**dadurch gekennzeichnet, dass** die weitere die Längskante (K1) bildende Seitenwand (1.4) im Bereich der Sicke (2) eine querverlaufende weitere Aufwölbung (10) aufweist, wobei der Sickengrund (2.1) endseitig im Bereich dieser weiteren Seitenwand (1.4) in die Aufwölbung (10) übergeht.

3. Hohlprofil (1) nach Anspruch 1 oder 2,
**dadurch gekennzeichnet, dass**
- an der gegenüberliegenden Längskante (K2), die von der Seitenwand (1.1) mit Aufwölbung (3) gebildet wird, eine weitere Sicke (4) mit einer weiteren Aufwölbung (5) ausgebildet ist, und
- die weitere Aufwölbung (5) mit einem Ende (5.2) im Verbindungsbereich des Innensteges (1.5) mit der Seitenwand (1.1) ausgebildet ist.

4. Hohlprofil (1) nach Anspruch 3,
**dadurch gekennzeichnet, dass** die beiden Aufwölbungen (3, 5) mit einem quer zur Längsrichtung (L) miteinander fluchtenden Verlauf ausgebildet sind.

5. Hohlprofil (1) nach einem der vorhergehenden Ansprüche,
**dadurch gekennzeichnet, dass** das Hohlprofil (1) als Längsträger oder als Querträger für eine Fahrzeugkarosserie ausgebildet ist.

6. Fahrzeugkarosserie mit einem Hohlprofil (1) als Längsträger oder Querträger nach einem der vorhergehenden Ansprüche.

## Claims

1. A hollow profiled element (1), comprising an inner web (1.5) forming a multi-chambered structure and extending in a longitudinal direction (L) and comprising a plurality of longitudinal edges (K1, K2, K3, K4), which extend in a longitudinal direction (L) and are connected by side walls (1.1, 1.2, 1.3, 1.4), wherein a longitudinal edge (K1) has at least one depression (2), the depression base (2.1) of which extends transversely to the longitudinal direction (L) and at an angle to the side walls (1.1, 1.4) forming the longitudinal edge (K1),
**characterised in that**
- a side wall (1.1) forming the longitudinal edge (K1) has a transversely extending bulge (3) in the region of the depression (2), wherein the depression base (2.1) transitions at the end into the bulge (3) in the region of said side wall (1.1),
- the bulge (3) is designed with a shape that has a convex form in the transition to the depression (2) and drops to the level of the side wall (1.1) before an opposite longitudinal edge (K2) is reached,
- the inner web (1.5) connects the side wall (1.1) having the bulge (3) with an oppositely-situated side wall (1.2), and
- the bulge (3) is formed with one end (3.2) in the connecting region of the inner web (1.5) with this side wall (1.1).

2. Hollow profiled element (1) according to claim 1,
**characterised in that** the further side wall (1.4) forming the longitudinal edge (K1) in the area of the depression (2) features a further transversely extending bulge (10), wherein the depression base (2.1) transitions at the end into the bulge (10) in the region of said further side wall (1.4).

3. Hollow profiled element (1) according to claim 1 or 2,
**characterised in that**
- at the oppositely-situated longitudinal edge (K2), which is formed by the side wall (1.1) with bulge (3), is formed a further depression (4) with a further bulge (5), and
- the further bulge (5) is formed with one end (5.2) in the connecting region of the inner web (1.5) with the side wall (1.1).

4. Hollow profiled element (1) according to claim 3,
**characterised in that**
both bulges (3,5) are formed aligned together transversely to the longitudinal direction (L).

5. Hollow profiled element (1) according to any one of the preceding claims,
**characterised in that** the hollow profiled element (1) is formed as a longitudinal beam or transverse beam for a vehicle body.

6. Vehicle body with a hollow profiled element (1) as a longitudinal beam or transverse beam according to any one of the preceding claims.

## Revendications

1. Profilé creux (1) avec une traverse intérieure (1.5) formant une structure à plusieurs chambres et s'étendant dans une direction longitudinale (L) et avec plusieurs arêtes longitudinales (K1, K2, K3, K4) s'étendant dans une direction longitudinale (L) et reliées par des parois latérales (1.1, 1.2, 1.3, 1.4), pour lequel une arête longitudinale (K1) comporte au moins une moulure (2) dont le fond de moulure (2.1) s'étend transversalement par rapport à la direction longitudinale (L) et obliquement par rapport aux parois latérales (1.1, 1.4) formant l'arête longitudinale (K1),
**caractérisé en ce que**
- une paroi latérale (1.1) formant l'arête longitudinale (K1) présente dans la zone de la moulure (2) un renflement (3) s'étendant transversalement, dans lequel le fond de moulure (2.1) se transforme en renflement (3) à son extrémité dans la zone de cette paroi latérale (1.1),
- le renflement (3) est réalisé avec une forme qui présente une forme convexe dans la transition avec la moulure (2) et qui chute sur le plan de la paroi latérale (1.1) avant d'atteindre une arête longitudinale (K2) opposée,
- la traverse intérieure (1.5) relie la paroi latérale (1.1) présentant le renflement (3) à une paroi latérale (1.2) opposée, et
- le renflement (3) est réalisé avec une extrémité (3.2) dans la zone de liaison de la traverse intérieure (1.5) à cette paroi latérale (1.1).

2. Profilé creux (1) selon la revendication 1,
**caractérisé en ce que** l'autre paroi latérale (1.4) formant l'arête longitudinale (K1) présente dans la zone de la moulure (2) un autre renflement (10) s'étendant transversalement, dans lequel le fond de moulure (2.1) se transforme en renflement (10) à son extrémité dans la zone de cette autre paroi latérale (1.4).

3. Profilé creux (1) selon la revendication 1 ou 2,
**caractérisé en ce que**
- une autre moulure (4) avec un autre renflement (5) est réalisée au niveau de l'arête longitudinale (K2) opposée qui est formée par la paroi latérale (1.1) avec le renflement (3), et
- l'autre renflement (5) est réalisé avec une extrémité (5.2) dans la zone de liaison de la traverse intérieure (1.5) à la paroi latérale (1.1).

4. Profilé creux (1) selon la revendication 3,
**caractérisé en ce que** les deux renflements (3, 5) sont réalisés avec une allure alignée l'un avec l'autre transversalement par rapport à la direction longitudinale (L).

5. Profilé creux (1) selon l'une quelconque des revendications précédentes,
**caractérisé en ce que** le profilé creux (1) est réalisé en tant que longeron ou en tant que traverse pour une carrosserie de véhicule.

6. Carrosserie de véhicule avec un profilé creux (1) en tant que longeron ou traverse selon l'une quelconque des revendications précédentes.
